# EUROPEAN PATENT SPECIFICATION

(11) **EP 3 353 873 B1**
(45) Date of publication and mention of the grant of the patent: **20.01.2021**
(21) Application number: 16791433.2
(22) Date of filing: 09.09.2016
(51) Int. Cl.: H02J 3/00

(54) **METHOD AND DEVICE FOR ELECTRIC POWER SUPPLY OF A SINGLE-PHASE APPLIANCE DURING A FAILURE OF ONE OR MULTIPLE PHASES**
VERFAHREN UND VORRICHTUNG ZUR STROMVERSORGUNG EINES EINPHASIGEN GERÄTES BEI AUSFALL EINER ODER MEHRERER PHASEN
PROCÉDÉ ET DISPOSITIF D'ALIMENTATION ÉLECTRIQUE D'UN APPAREIL MONOPHASÉ PENDANT UNE PANNE D'UNE OU DE PLUSIEURS PHASES

(30) Priority: 21.09.2015 SK PV1622015 U
(43) Date of publication of application: 01.08.2018
(73) Proprietor: Slovenská pol'nohospodárska univerzita v Nitre, 949 76 Nitra (SK)
(72) Inventor: CVIKLOVIC, Vladimír, 951 92 Zikava (SK); OLEJÁR, Martin, 951 24 Nové Sady (SK); HRUBY, Dusan, 949 01 Nitra (SK); LUKÁS, Ondrej, 949 01 Nitra (SK); PALKOVÁ, Zuzana, 949 01 Nitra (SK); PAULOVIC, Stanislav, 951 07 Cechynce (SK); PÁNIK, Vladimír, 951 97 Zitavany (SK); ADAMOVSKY, Frantisek, 949 01 Nitra (SK)
(74) Representative: Porubcan, Róbert
(86) International application number: PCT/IB2016/055401
(87) International publication number: WO 2017/051277

(56) References cited:
- EP-A1- 2 475 059
- EP-A1- 2 846 436
- EP-A2- 2 665 346
- DE-A1-102011 078 047

## Description

### Field of technology

The invention concerns a method to ensure the electric power supply of a single-phase appliance during a failure (or blackout, or outage) of one or multiple phases in three-phase electric distribution system with AC voltage. The invention also discloses a device for the power supply from one of the available three phases of the distribution system.

### Prior state of the art

Sources of uninterrupted electric voltage are known; these are also known as Uninterruptible Power Supplies (or Sources, or Systems) - back-up power supplies which are used as accumulators and after the interruption of the primary power supply source - for example, during a failure in the distribution system - the power supply is ensured by a converter which takes the energy from the electric accumulator. Three basic connections or arrangements of the back-up power supply are known: Off-Line, Line-Interactive and On-Line. During all abovementioned connections the supplied power and temporal endurance during the failure of the primary power supply are dependent on the performance of the converter (alternator) and on the capacity of the accumulator. In case of On-Line connection the desired performance is limited by the performance of the converter even during the supply of electric energy from the primary source of voltage, since the output from the back-up source is always interconnected with the converter connected to the accumulator. This leads to difficult construction of the back-up sources, short life time of the accumulators and low overall efficiency.

The disadvantage of the accumulator back-up sources is their limited capacity; a failure occurs after the consummation of the electric energy available in the accumulator, even in case when the other phases of the three-phase electric distribution system are under voltage.

Such electric generators are known, too, which ignite the combustion engine in case of a failure in the distribution system; this engine runs the generator of the electric voltage with the respective regulation of the frequency. Such devices are, however, costly and they require regular maintenance and therefore they are only used in cases of important objects such as hospitals, data storages and so on.

Publication US 2015/0162782 A1 discloses three-phase back-up source which is capable of ensuring the power supply of all three phases during a failure of one or all phases. This back-up source uses a three-phase transformer, three batteries and three converters, which leads to complicated and expensive construction. The solution according to CN204205707 (U), which uses three-phase bridge converter and isolation transformer is complicated, too.

Connection according to DE3935564A1 uses multiple back-up sources and it performs complicated assessment of the system parameters; it is therefore suitable only for complex structures of the appliances. Similarly unsuitable are technical solutions and inventions according to publications KR100984323B1, CN102957196A, CN204243755U, CN102801209A, too. Document EP2665346A2 discloses a method of supplying electric power according to the preamble of claim 1.

In three-phase electric distribution system there are often failures in one or two phases only; obviously, it cannot be determined in advance which phase will fail. Failure of all three phases uses to be connected with fatal damaging of certain element of the distribution system - for example, a fall of the pole with electric wiring, a fire in the transformer station; these things do not happen often, though. It is more usual that individual phases fail; these failures are caused by overload of a given phase or cutting of the wire of the wiring, and so on. Even such failure and interruption of the electric power supply in a single phase is problematic, though, since single-phase appliances are connected precisely to a given phase will remain without electric power supply. Such problems with the phase failures of the electric power supply are mostly common in villages or at the cities' peripheries.

The failure of one or two phases affects single-phase appliances which are connected precisely to a given failed phase. This connection to a phase, that is, the division of three phases between plugs in a household is fixedly, physically determined by the installation of the electricity distribution and its connection in the distribution box. This does not allow to use flexibly the available phase for the power supply of the appliances which are supplied by power from the failed phase. In case of certain appliance in the household, such as heating boilers running on solid fuels or freezers, the failure of the power supply can cause damages or it can threaten the safety, for example by overboiling the water in the state where the solid fuel is still burning or where the circulation pump does not ensure heat dissipation.

Such simple solution is desired and now known, which will - during the failure of one or two phases - allow the power supply of an appliance by the electric voltage from the phase with available electric voltage, and in case of failure of all three phases it will function as a back-up source. The devices should be simple, capable of quick response and it should be maintenance-free.

### Essence of the invention

The invention is defined in claims 1 to 11. Abovementioned deficiencies are significantly remedied by the method of electric power supply of a single phase appliance during the failure of one or multiple phases in the three-phase electric distribution system, where the lack of voltage is detected by a sensor on the first phase which supplies the electric appliance by power, according to this invention, which essence lies in the fact that after the detection of the failure or lack of voltage on the first phase the power supply of the appliance is connected to the available second phase, whereby the sensor then measures the voltage of this phase and in case of the failure or lack of voltage on the second phase the power supply of the appliance is connected to the available third phase.

The lack or failure of the voltage, the failure of the power supply or outage of the phase in this document denotes mainly a state where there is an insufficient voltage in a respective phase, usually a zero voltage or almost zero voltage. The state where the electric power supply lacks the required sinusoid course of the voltage or where it lacks the required frequency can be considered a voltage outage, lack, blackout or failure, too. The naming of the phases as first, second and third only denotes an order, otherwise all phases are equal and interchangeable.

In order to ensure the power supply during the failure of all three phases, the method according to this invention is supplied by the step where after the connection of an appliance to the third phase a sensor measures voltage of this phase and in case of the failure of the third phase the power supply of the appliance is connected to the output of the converter, which produces an AC voltage with the respective features from the connected accumulator.

The essential feature of the proposed invention is the connection of the single-phase appliance to a phase which is not affected by the failure of voltage. This means that if the phase to which the single-phase electric appliance is originally connected is without voltage, we will connect the single-phase electric appliance to other phase under voltage. During the detection of the outage of the phase the power supply is subsequently connected to other phases under voltage; or if it is subsequently determined that none of the phases has voltage, the power supply is switched to the regime known from the use of back-up accumulator source. Significant advantage of this method is the increase in the effectiveness of the power supply.

Hitherto used methods of backing up are based on the accumulation of the electric energy which is then subsequently used as a source of energy with a DC voltage for the converter, which subsequently creates an AC voltage with required value. It is however, much more preferable to proceed according to this invention in such a way that the power supply of an appliance is firstly connected to other phase. If any phase of the electric distribution has voltage, the appliance is electrically supplied by power from the available electric distribution system; there are thus neither electric losses, nor temporal limitations resulting from the capacity of the accumulator. This increases the life time of the device and it also lowers its investment and operating costs.

The failure of the power supply in a phase can be detected by three sensors which are connected on individual phases in the three-phase electric distribution network, or it can be detected by a single sensor placed on the supply branch after the point of switching of the phases - that is, on the side of the appliance. In such case a state of the phase can be detected on one phase only - concretely on the phase which is currently switched on to supply an appliance with power. This is in principle sufficient, since during the outage at this phase there is a switch to other phase, which at the same time switches the detection of the power supply realized by means of a single sensor. A single detection sensor gradually tests the available phases. The term "sensor" should be understood to denote any element capable of detecting the state of a phase. The sensor can be independent element, or it can be a part of another element; the detection can be direct, for example by measuring the course of the voltage, by monitoring the amplitude half waves, or indirect on the basis of the subsequent manifestation of the failure or outage of electric voltage.

It is preferable if the sensor of a phase's failure is galvanically separated form the voltage power supply and the voltage on the phase is detected indirectly on the output from the transformer.

The switching from the failed phase to other phase can be realized by various switches. It is preferable if it is a hardware designed switch which prevents an inter-phase short circuit. A switch can be used which switches for input poles to a single output pole. Phases are connected to three poles and a voltage from the output of the converter is led to the fourth pole.

It is preferable if a simple switch is used, whereby this switch is electrically controlled and switches between two input poles - it has therefore two switching positions. For realization of choice from three phases by a two-position switch it suffices if there are two two-pole switches place in cascade one after another. First and second phase are connected with two input poles of the first switch. The third phase and output from the first switch are connected with the input poles of the second switch. On the output of the second switch a state of connection with any of the three phases can be achieved by appropriate setting of both switches.

The connection with two switches can be supplied by the third switch, where the output from the second switch is led to the input of the third two-pole switch and the output from the converter is connected to the second input of this two-pole switch. Now it is possible, with the appropriate position of three switches, to alternatively connect the power supply of an appliance to one of the three phases or to the output of the converter.

Hardware cascade connection of two-pole switches prevents the risk of inter-phase short circuit. Even if the power supply of an appliance is connected to the first phase, all three switches are in the same limit position. The failure in the first phase causes the switching of the first switch to the opposite position, by which the power supply branch together with the detection of the voltage is connected with the second phase, while the first phase is disconnected. If the second phase has appropriate voltage, the direction process is finished, and no other reconnection of the phases is necessary; the appliance is supplied by power from the second phase. If the second phase lacks the sufficient voltage, the switching of the second and - eventually - third two-pole switch takes place.

High safety and reliability of the device is achieved thanks to the disclosed method of subsequent switching in the cascade, whereby the construction of the device is kept simple. Gradual switching from the phase without voltage to another phase is accompanied by the detection of the voltage on the actually connected phase, which is an important feature according to our invention an it allows for reliable and very energy saving construction of the device without the unnecessarily repeating elements in each phase. Use of a cascade of the switches rules out the inter-phase short circuit which could lead to the destruction of the device or switching off of circuit-breakers.

The deficiences mentioned with regard to the prior state of the art are significantly remedied by a device for the electric power supply of a one-phase appliance during the failure of one or multiple phases in the three-phase electric distribution system, too, where the device has a one-phase plug designed for the power supply of the appliance, and where the device has a control unit and a sensor of the failure or outage of the voltage, according to this invention, which essence lies in the fact that the plug is supplied by power from the output pole of the switch which has at least two input poles connected to two different phases of the electric distribution network; the switch has one output pole, whereby the switch is controlled by the control unit which is connected to a sensor of the failure or outage of the voltage, whereby the sensor of the failure of the voltage is connected to the output side of the switch.

The device is in principle functional even with use of a switch with two output poles. In such case we can choose from one of two available phases. It will be preferable if the solution has a switch with three output poles, where the individual phases of the three-phase electric distribution system are are led to the three input poles; alternatively, two switches with two input poles following each other in the cascade can be used. If yet another pole of the switch is used, or if a third two-pole switch is included in the cascade, the output from the converter getting energy from the accumulator can be used as a fourth option of the power supply. That means that in case of the failure of all phases the device acts as a standard back-up source; in case of failure of one or two phases the device acts as a switch to the available phase of the connection with the plug.

The advantage of the connection according to this invention is its simple and reliable construction; the device is maintenance-free even in cases of large accumulators, whereby it is capable of overcoming even a failure of one or two phases lasting for unlimited time. The device is especially preferable for the households, for example for the purposes of electric power supply of a solid fuel boiler, where the device can be used to prevent accidents and damages caused by high temperature of the boiler and water in the system. The device is also preferably used for refrigerators or freezers, and not just in households. Short sections of time without supply during the switching of the phases are not a problem in case of most of household appliances.

The connection with one sensor of of outage of the phase, which is located after the point of switching and it is therefore connected to the actually switched phase, simplifies construction, diminishes the number of components, increases overall reliability of the device and lowers the energy consumption of the device. It is preferable if this sensor of the failure of the voltage is galvanically separated from the measured voltage, for example by means of a separating transformer. On a side of the output of the switch there is a transformer which can - together with the rectifier and stabilizer - be used for the power supply of the control unit, too. The sensor of the failure of the power supply will be connected to the output from this transformer. Capacitors used in stabilizer store enough energy necessary for the power supply of the control unit and for the control of the switch during the failure of the power supply on the actual phase. The device is thereby capable of the operation without accumulator, too; the accumulator is only necessary for the realization with the power supply of an appliance during the failure of all three phases.

In the preferable arrangement the display element and/or control element and/or communication interface can be connected to the control unit.

A state of the device, an identification of the actually connected phase, a state of the accumulator, or various statistical data such as the number of recorded failures of the power supply and so on, can be displayed on the display device, which can be - for example - in form of LED diodes or display.

Control element serves to enter the instructions, to switch the states, to induce or control the display, or it can have a form of the buttons or touch screen, and so on.

Communication device, for example RS-485 with the protocol MODBUS allows to integrate the device to the larger system of the intelligent house, or it also allows remote communication with the device and direction of its states. The communication device can send a message to the owner concerning the failure of the phase or of the whole power supply.

The arrangement capable of supplying the electric appliance with power during the failure of all three phases will include an accumulator with the converter and the charger. This part of the device can be similar to the hitherto known accumulator sources of a singe-phase power supply. In order to increase the life time of the accumulator, it is preferable if the state of the accumulator and its charging is controlled by the control unit. The control unit can be charged from the accumulator. The control unit can be supplied by power from the accumulator. The charger and the converter can be connected to the accumulator through switches; in the normal state without failure of the power supply these can be disconnected so the energy consummation of the device is not increased.

The advantage of the invention lies mainly in its energetic efficiency. The device uses whichever the available phases for the long-term power supply without the need for previous accumulation of the electric energy. The device is also extremely energy saving with regard to its own power consumption: the transformer and the control unit can consumbe up to 0,5 W in the state without the failure of the power supply. The advantage of the device is also a long life time of the electric accumulator and high performance load. The device has simple construction, with few steps, and it uses reliable electric and electronic components.

### Brief description of drawings

The invention is further disclosed by drawing 2. For the purposes of clarity, the mutual connection of the conductors N and PE - neutral and protective conductor - which are in fact connected pursuant to relevant standards, is not displayed. The dashed line shows the order of the switches. The displayed position of the switches is only illustrative.
Figures 1a, 1b and 1c depict a scheme or diagram with two switches connected one after another in a cascade, whereby in the basic realization the device is without accumulator and without converter. Figure 1a depicts a plug of the device connected to the L1 conductor of the first phase; figure 1b depicts the plug connected to the conductor L2 of the second phase; figure 1c depicts the plug connected to the conductor L3 of the third phase.
Figure 2 depicts a more complex scheme or diagram of the device with three switches, an accumulator and a converter.
Figre 3 shows a schematically depicted device with one switch with four input poles.

### Examples of realization

### Example 1

In this example, which is not covered by the appended claims, according to drawings 1a, 1b and 1c tw device has two switches 21, 22 connected one after another in a cascade. First input pole 21a of the first switch 21 is connected to the conductor L1 of the first phase. Conductor L2 of the second phase is connected to the second input pole 21b of the first switch 21. By this connection the first switch 21 can switch to first or second phase on its output. The outpu from the first switch 21 is connected to the first input pole 22a of the second switch 22. The second input pole 22b of the second switch 22 is connected to the conductor L3 of the third phase. The second switch 22 can therefore connect the output from the first switch 21 or from the third phase to its output.

The output from this cascade of the switches 21, 22, that is, the output from the second switch 22 is connected to the plug 4, which is designed for the power supply of a single-phase appliance. According to the position of the switches 21, 22, the voltage from on of the three phases on the conductors L1, L2, L3 is led to the input the plug 4.

The switches 21, 22 are controlled by the control unit 1. A signal from the sensor 3 of the outage or failure of the voltage - which is connected to the output of the transformer 5 - is is used for the control. A rectifier 7 and a stabilizer 8 is connected to the output from the transformer 5, whereby a control unit 1 is supplied by power from the stabilizer 8. Among other things, the transformer 5 galvanically separates the electric part of the device, mainly the power supply of the control unit 1 and the sensor 3 of the failures of the voltage in the electric distribution system. A display element 14 is connected to the control unit 1, in this case a display element in form of three color LED diodes.

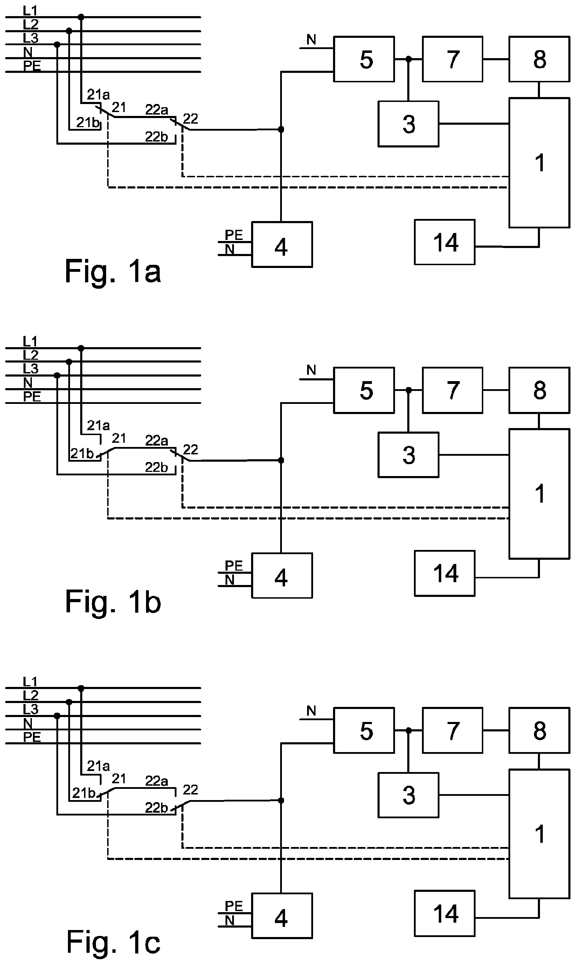

Firstly, according to the figure 1a, the plug 4 is connected to the conductor L1. in such a way that the switches 21 and 22 have the poles 21a and 22a switched. The failure of the voltage in the conductor L1_{.} of the first phase manifests itself on the transformer 5 immediately by the loss of voltage on the secondary winding. The sensor 3 of the outage reacts to this and it sends the signal concerning the failure of the voltage to the control unit 1. The control unit 1 sends an instruction to swtich the first switch 21, which is switched to the position of the second input pole 21b; this is depicted on the figure 1b. In this state the transformer 5 and the plug 4 is connected to the conductor L2 of the second phase. If there is appropriate voltage on the conductor L2 of the second phase, the sensor 3 of the outage decets such state on the output from the transformer 5 and the plug 4 is supplied by power from the conductor L2 of the second phase. In case there is no appropriate voltage on the conductor L2 of the second phase, the control unit 1 switches the second switch 22 to the position of the second input pole 22b, as depicted on the figure 1c. In such state the plug 4 is supplied by power from the conductor L3 of the third phase.

An energy from the capacitors in a stabilizer 8 is used for the functioning of the control unit 1 and for the switching of the switches 21, 22 during the failure of the actually connected phase. In this example the device does not need any accumulator; however, in case of failure of all three phases the plug 4 is without power supply.

In this example the device is used for the power supply of the circulation pump of the solid fuel boiler.

### Example 2

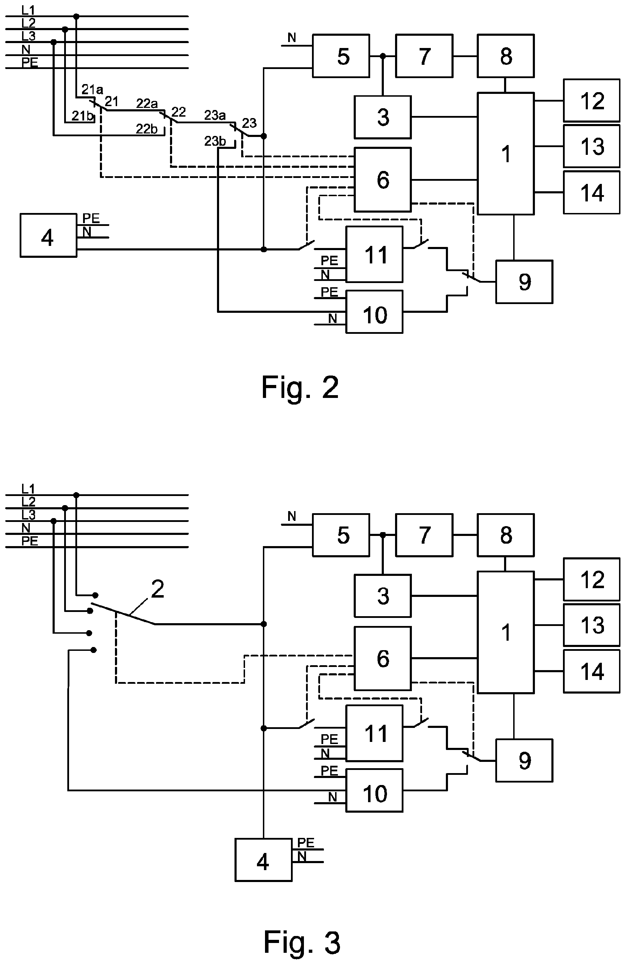

In this example according to figure 2 the device has three connected switches 21, 22, 23 placed one after another in the cascade. A circuit with the transistor field 6 is used for the control of the switches 21, 22, 23, whereby the field 6 consists from transistors ULN2803N in connected Darlington structure. The transistor field 6 is connected with the control unit 1 by means of a singe-chip microprocessor C8051F530A.

A network transformer 5 is connected to the output of the switch 23 and behind the transformer 5 there is a rectifier 7 and a stabilizer 8. The transformer 5 thereby ensures the power supply of the electric circuits of the device, its secondary voltage is 12 V (similar to the voltage of the accumulator 9), the power is 2 VA, the stable consumption from the network does not surpass 0,5 W in a state without the failure of the phase and 1,5 W in cases of failure of the electric distribution system. A voltage is led from the output of the transformer 5 to the sensor 3 of the failure of the voltage, whereby the task of this sensor 3 is to send a signal to the control unit 1 already during the failure of a single half-wave of the supply voltage. The sensor 3 of the failure includes a combination of the resistors, capacitors and diodes. The advantage of the sensing of the voltage on the secondary side of the transformer 5 is the galvanic separation of the electronics from the network.

A Graetz bridge with the current 1 A is used as a rectifier 7. The stabilizer 8 of a DC voltage is composed of the filter capacitor, suppression capacitor and integrated circuit LP2950-5.0ACZ. Such connection serves for the power supply of all electronic circuits in the device.

A commercial product F5C412 with the maximal output power 300 W is used as a converter 10 of the voltage. In case of the failure of the network this is connected to the lead accumulator 9 with the respective voltage 12 V and with a capacity of 44 Ah. The output of the converter 10 is connected to the second output pole 23b of the third switch 23.

There are also switches in the connection, which connect the charger 11 to the AC voltage and to the accumulator 9. A transistor field 6 controlled by the control unit 1 is used to control these switches.

A control element 13 in form of the buttons is connected to the control unit 1; by means of these buttons the other functions can be started, such as the full charging of the accumulator, the connection of the load to the back up source, or the switching to the normal state. The state of the accumulator 9 and the overall regime of the whole device is indicated by the LED diodes in the display unit 14. In another example, an LCD display can be used in this place, but in this examble LED diodes are used in order to increase the resistance of the device in the abrasive environment. The charger 11 is external, industrially produced and commercially independently available, for example a KBL 120 type of the charger. The charger 11 is connected to the conductors L1, L2, L3 and to the accumulator 9 automatically by means of the switches, following the programme of the control unit 1; this only happens in case of need for recharging.

The control unit 1 monitors the state of the accumulator 9 by measuring the voltage. In this case, the program designed for maintenance of the maximal life time of the lead accumulator 9; this life time can reach almost 15 years. Device contains a communication interface 12 for the purposes of remote monitoring of the state of the network and the state of the whole device. In this example this concerns physical layer RS-485 and MODBUS protocol, which is compatible with the communication interfaces 12 by most of the producers of the intelligent installations. The available information concerning the voltage of the accumulator 9, the outage of the phase, or the information concerning the normal functioning of the device, the statistical information, and so on.

The device works similarly as in example 1, whereby during the eventual failure of the voltage in all phases the plug 4 is connected to the output of the converter 10 by the third switch 23 with the second input pole 23b and the appliance is supplied by power from the accumulator 9. The control unit 1 in a state of the sufficient charging of the accumulator 9 will disconnect the charger 11 from the power supply and from the accumulator 9 itself, so that there are no losses of energy in the stand-by mode.

### Example 3

In this example, which is not covered by the appended claims, according to figure 3 a switch 2 with four input poles is used, which are connected to three conductors L1, L2, L3 and to the converter 10.

The device according to this invention is used for the power supply of the freezer in the store. In case of the outage of the phase an SMS is sent through the communication interface 12 to the preset telephone number; in case of the failure of all phases, the control unit 1 calculates an expected time of the endurance of the accumulator 9 taking statistically into account the past consumption, and this expected andurance time is sent in the SMS.

### Industrial applicability

Industrial applicability is obvious. According to this invention, it is possible industrially and repeatedly produce and use a devise for the electric power supply of the single-phase appliance during the failure of one or multiple phases, whereby the appliance is reliable and energetically cheap.

### List of related symbols

- 1 -: control unit
- 2 -: switch
21 - first switch
21a - first input pole
21b - second input pole
22 - second switch
22a - first input pole
22b - second input pole
23 - third switch
23a - first input pole
23b - second input pole
- 3 -: sensor of the failure
- 4 -: plug
- 5 -: transformer
- 6 -: transformer field
- 7 -: rectifier
- 8 -: stabilizer
- 9 -: accumulator
- 10 -: converter
- 11 -: charger
- 12 -: communication interface
- 13 -: control element
- 14 -: display element

- L1 -: conductor of the first phase
- L2 -: conductor of the second phase
- L3 -: conductor of the third phase
- N -: neutral conductor
- PE -: protective conductor

## Claims

1. A method of an electric power supply of a single-phase appliance during a failure of one or multiple phases in a three-phase electric distribution system,
where a sensor (3) detects a failure of a voltage on a first phase which supplies the electric appliance with power,
where after the detection of the failure of the voltage on the first phase the power supply of the appliance is connected to a second available phase following an instruction from a control unit (1), whereby the sensor (3) measures the voltage of the second phase,
and the power supply of the appliance is connected to an available third phase in case of the failure of the voltage on the second phase, following an instruction from a control unit (1), whereby the sensor (3) measures the voltage of the third phase,
wherein the control unit (1) controls switching between the phases following a signal from the sensor (3),
is **characterized by** the fact,
that if after the connection to the third available phase the sensor (3) still detects the failure of the voltage on the third phase, following an instruction from a control unit (1) the power supply of the appliance is connected to an output of a converter (10) which produces an AC voltage from an accumulator (9) connected to the converter (10), wherein the process of switching between the first to third phase and the output of the converter is carried out through two-position switches (2) connected one after another in a cascade.

2. The method of the electric power supply of the single-phase appliance during the failure of one or multiple phases according to the claim 1 **is characterized by the fact**, that the sensor which detects the failure of the power supply comprises three sensor units which are connected to individual phases on conductors (L1, L2, L3), respectively.

3. The method of the electric power supply of the single-phase appliance during the failure of one or multiple phases according to the claim 1 **is characterized by the fact**, that the sensor is a single sensor (3) which is placed on a supply branch on a side of the plug (4) behind the point of switching of the phases.

4. The method of the electric power supply of the single-phase appliance during the failure of one or multiple phases according to any of the claims 1 to 3 **is characterized by the fact**, that a state of an accumulator (9) is detected and a charger (11) in the state of the full-charged accumulator (9) disconnects from both the power supply and the accumulator by means of switches.

5. A device for an electric power supply of a single-phase appliance during a failure of one or multiple phases in case of a three-phase electric distribution system, wherein the device has a single-phase plug (4) designed for being supplied by power from the three phase electric distribution system, a control unit (1) and a sensor (3), the sensor (3) being adapted to sense a failure of the voltage on the phases, and being connected to the control unit (1),
wherein the device has a converter (10) and an accumulator (9), an input of the converter (10) being connected to the accumulator (9),
wherein the device has three switches (21, 22, 23) which are configured to be controlled by the control unit (1), wherein each switch has two input poles, wherein
the first input pole (21a) of the first switch (21) is connected to the conductor (L1) of the first phase;
the second input pole (21b) of the first switch (21) is connected to the conductor (L2) of the second phase;
the output from the first switch (21) is connected to the first input pole (22a) of the second switch (22);
the second input pole (22b) of the second switch (22) is connected to the conductor (L3) of the third phase;
the output from the second switch (22) is connected to the first input pole (23a) of the third switch (23);
the output from the converter (10) is connected to the second input pole (23b) of the third switch (23);
the output from the third switch (23) is connected to the plug (4),
and wherein the sensor (3) is connected to the output of the third switch (23).

6. The device for the electric power supply of the single-phase appliance during the failure of one or multiple phases in case of the three-phase electric distribution system according to the claim 5 **is characterized by the fact,** that the sensor (3) is galvanically separated from the voltage of the phase, preferably through a transformer (5).

7. The device for the electric power supply of the single-phase appliance during the failure of one or multiple phases in case of the three-phase electric distribution system according to the claim 6 **is characterized by the fact**, that the transformer (5) is connected to the output of the third switch 23); and a rectifier (7) and a stabilizer (8) for the power supply of the control unit (1) are connected to the transformer (5).

8. The device for the electric power supply of the single-phase appliance during the failure of one or multiple phases in case of the three-phase electric distribution system according to any of the claims 5 to 7 **is characterized by the fact**, that a display element (14) is connected to the control unit (1).

9. The device for the electric power supply of the single-phase appliance during the failure of one or multiple phases in case of the three-phase electric distribution system according to any of the claims 5 to 8 **is characterized by the fact**, that a control element (13) is connected to the control unit (1).

10. The device for the electric power supply of the single-phase appliance during the failure of one or multiple phases in case of the three-phase electric distribution system according to any of the claims 5 to 9 **is characterized by the fact**, that a communication interface (12), preferably RS-485 with MODBUS protocol, is connected to the control unit (1).

11. The device for the electric power supply of the single-phase appliance during the failure of one or multiple phases in case of the three-phase electric distribution system according to any of the claims 5 to 10 **is characterized by the fact**, that a transistor field (6) for the control of the switches (2, 21, 22, 23) is connected to the control unit (1), preferably the transistor field (6) controls the switches of the charger (11), too.

## Patentansprüche

1. Eine Verfahren zur Stromversorgung eines einphasigen Gerätes bei Ausfall einer oder mehrerer Phasen im dreiphasige Netzwerk,
wobei es mit dem Sensor (3) der Spannungsausfall der ersten Phase, die das elektrische Gerät einspeist, ermittelt wird,
wo es nach Ermittlung vom Spannungsausfall der ersten Phase aufgrund der Instruktion der Steuereinheit (1) die Einspeisung des Geräts an die verfügbare zweite Phase umgeschaltet wird, wobei die Spannung der zweiten Phase mit dem Sensor (3) gemessen wird,
und im Falle des Spannungsausfalls der zweiten Phase aufgrund der Instruktion der Steuereinheit (1) die Einspeisung des Geräts an die verfügbare dritte Phase umgeschaltet wird, wobei die Spannung der dritten Phase mit dem Sensor (3) gemessen wird,
wo die Umschaltung zwischen den einzelnen Phasen aufgrund des Signals vom Sensor (3) durch die Steuereinheit (1) gesteuert wird,
**dadurch gekennzeichnet, dass**
es wenn in der dritten Phase nach dem Anschluss an die verfügbare dritte Phase des Sensors (3) ein Stromausfall festgestellt wird, wird die Stromversorgung des Geräts auf Anweisung des Steuergeräts (1) an den die Wechselspannung vom Akku erzeugenden Ausgangswandler (10) angeschlossen, wobei die Umschaltung unter der ersten und dritten Phase und dem Ausgang des Wandlers (10) durch die in Kaskade nacheinander geschalteten Zweipositionsschalter (2) erfolgt.

2. Die Verfahren zur Stromversorgung eines einphasigen Gerätes bei Ausfall einer oder mehrerer Phasen nach Anspruch 1 **dadurch gekennzeichnet, dass** der den Stromausfall ermittelnde Sensor drei gesondert an Leitern einzelnen Phasen (L1, L2, L3) angeschlossene abtastende Einheiten enthält.

3. Die Verfahren zur Stromversorgung eines einphasigen Gerätes bei Ausfall einer oder mehrerer Phasen nach Anspruch 1 **dadurch gekennzeichnet, dass** der Fühler ein selbständiger Sensor (3) ist, der am Leitungsstrang an der Seite der Steckdose (4) nach dem Phasenumschaltungspunkt platziert ist.

4. Die Verfahren zur Stromversorgung eines einphasigen Gerätes bei Ausfall einer oder mehrerer Phasen nach beliebigem Anspruch 1 bis 3 **dadurch gekennzeichnet, dass** es des Akkumulators Zustand ermittelt wird und das Ladegerät (11) im Zustand der Vollladung des Akkumulators (9) mit Hilfe von Schaltern vom Akku (9) und der Speisespannung getrennt wird.

5. Eine Vorrichtung zur Stromversorgung eines einphasigen Gerätes bei Ausfall einer oder mehrerer Phasen im dreiphasige Netzwerk, wo die Einrichtung eine einphasige zur Versorgung vom dreiphasige Netzwerk bestimmte Steckdose (4) und eine Steuereinheit (1) als auch einen Sensor (3) besitzt, wo der Sensor (3) an die Ermittlung der Spannung in einzelnen Phasen angepasst und an die Steuereinheit (1) angeschlossen ist,
wobei die Einrichtung einen Wandler (10) und einen Akkumulator (9) besitzt, der Eingang der Wandler (10) ist am Akkumulator (9) angeschlossen,
wobei die Einrichtung drei Umschalter (21, 22, 23) besitzt, die so eingestellt sind, dass sie durch die Steuereinheit (1) gesteuert werden können, wobei jeder Umschalter zwei Eingangspole besitzt,
wo der erste Eingangspol (21a) des ersten Umschalters (21) am Leiter (L1) der ersten Phase angeschlossen ist,
der zweite Eingangspol (21b) des ersten Umschalters (21) am Leiter (L2) der zweiten Phase angeschlossen ist,
der Ausgang des ersten Umschalters (21) am ersten Eingangspol (22a) des zweiten Umschalters angeschlossen ist,
der zweite Eingangspol (22b) des zweiten Umschalters (22) am Leiter (L3) der dritten Phase angeschlossen ist,
der Ausgang des zweiten Umschalters (22) am ersten Eingangspol (23a) des dritten Umschalters angeschlossen ist,
der Ausgang des Wandlers (10) am zweiten Eingangspol (23b) des dritten Umschalters angeschlossen ist,
der Ausgang des dritten Umschalters (23) an der Steckdose (4) angeschlossen ist, und wo der Sensor (3) am Ausgang des dritten Umschalters (23) angeschlossen ist.

6. Die Vorrichtung zur Stromversorgung eines einphasigen Gerätes bei Ausfall einer oder mehrerer Phasen im dreiphasige Netzwerk, nach Anspruch 5 **dadurch gekennzeichnet, dass** der Sensor (3) von der Phasenspannung, vorteilhaft mit Hilfe eines Transformators (5), galvanisch getrennt ist.

7. Die Vorrichtung zur Stromversorgung eines einphasigen Gerätes bei Ausfall einer oder mehrerer Phasen im dreiphasige Netzwerk, nach Anspruch 6 **dadurch gekennzeichnet, dass** sie einen am Ausgang des dritten Umschalters (23) angeschlossenen Transformator (5) besitzt, und an diesem Transformator (5) ein Wandler (7) und ein Stabilisator (8) zur Stromversorgung der Steuereinheit (1) angeschlossen sind.

8. Die Vorrichtung zur Stromversorgung eines einphasigen Gerätes bei Ausfall einer oder mehrerer Phasen im dreiphasige Netzwerk, nach beliebigem Anspruch 5 bis 7 **dadurch gekennzeichnet, dass** es an der Steuereinheit (1) ein Darstellungselement (14) angeschlossen ist.

9. Die Vorrichtung zur Stromversorgung eines einphasigen Gerätes bei Ausfall einer oder mehrerer Phasen im dreiphasige Netzwerk, nach beliebigem Anspruch 5 bis 8 **dadurch gekennzeichnet, dass** es an der Steuereinheit (1) ein Steuerelement (13) angeschlossen ist.

10. Die Vorrichtung zur Stromversorgung eines einphasigen Gerätes bei Ausfall einer oder mehrerer Phasen im dreiphasige Netzwerk, nach beliebigem Anspruch 5 bis 9 **dadurch gekennzeichnet, dass** es an der Steuereinheit (1) eine Kommunikationsschnittstelle (12), vorteilhaft RS-485 mit dem MODBUS-Protokoll, angeschlossen ist.

11. Die Vorrichtung zur Stromversorgung eines einphasigen Gerätes bei Ausfall einer oder mehrerer Phasen im dreiphasige Netzwerk, nach beliebigem Anspruch 5 bis 10 **dadurch gekennzeichnet, dass** es an der Steuereinheit (1) ein Transistorenfeld (6) zur Steuerung der Umschalter (2, 21, 22, 23) angeschlossen ist, wobei es von Vorteil ist, wenn mit dem Transistorenfeld (6) auch die Schalter des Ladegeräts (11) gesteuert werden.

## Revendications

1. Une méthode d'alimentation électrique d'un appareil monophasé pendant une défaillance d'une ou plusieurs phases sur un réseau électrique ;
consistant dans le fait que dans le cas où un capteur (3) détecte une défaillance de tension sur la première phase alimentant l'appareil électrique en énergie ;
l'alimentation de cet appareil est commutée, après la détection de la défaillance sur la première phase, à la deuxième phase disponible suite à un ordre donné par l'unité de contrôle (1), la tension de cette deuxième phase étant mesuré par le capteur (3) ;
et qu'en cas de défaillance de tension sur la deuxième phase, l'alimentation de l'appareil est commutée, suite à un ordre de l'unité de contrôle (1), à la troisième phase disponible, la tension de cette troisième phase étant mesurée par le capteur (3),
l'unité de contrôle (1) commande la commutation des phases sous l'effet d'un signal du capteur (3),
**caractérisé en ce que**,
lorsqu'il est détecté, après la commutation à la troisième phase disponible moyennant le capteur (3), une défaillance de tension sur la troisième phase, l'alimentation de l'appareil en énergie est commutée, sur ordre donné par l'unité de contrôle, à la sortie du convertisseur (10) produisant la tension alternative à partir d'un accumulateur (9) connecté au convertisseur (10), la commutation entre première à troisième phases et la sortie du convertisseur étant effectuée via les commutateurs à deux positions (2) connectés en cascade, les uns après les autres.

2. La méthode d'alimentation électrique d'un appareil monophasé pendant une défaillance d'une ou plusieurs phases selon la revendication 1, **caractérisé en ce que** le capteur détectant la défaillance d'alimentation comprend trois unités de captation spécifiquement reliés aux différentes phases sur les conducteurs électriques (L1, L2, L3).

3. La méthode d'alimentation électrique d'un appareil monophasé pendant une défaillance d'une ou plusieurs phases selon la revendication 1, **caractérisé en ce que** le capteur utilisé constitue le capteur (3) autonome positionné sur la branche d'alimentation du côté d'une prise (4) derrière le point de commutation des phases.

4. La méthode d'alimentation électrique d'un appareil monophasé pendant une défaillance d'une ou plusieurs phases selon l'une quelconque des revendications 1 à 3, **caractérisé en ce qu'**il est vérifié l'état d'un accumulateur (9) et lorsque l'accumulateur (9) est complètement chargé, un chargeur (11) est déconnecté, à l'aide des interrupteurs, à la fois de l'alimentation électrique et de l'accumulateur (9).

5. Un dispositif d'alimentation électrique d'un appareil monophasé pendant une défaillance d'une ou plusieurs phases du réseau électrique triphasé, ce dispositif comportant une prise monophasée (4) conçue pour être alimentée en énergie à partir d'un réseau électrique triphasé, ainsi qu'une unité de contrôle (1) et un capteur (3), ce capteur (3) étant adapté à la détection d'une défaillance de tension sur les phases et étant relié à l'unité de contrôle (1),
ce dispositif est équipé d'un convertisseur (10), d'un accumulateur (9) et d'une sortie du convertisseur (10) et est relié à l'accumulateur (9),
ce dispositif est équipé de trois commutateurs (21, 22, 23) configurés de sorte à être commandés par l'unité de contrôle (1), chaque commutateur ayant deux pôles d'entrée,
le premier pôle d'entrée (21a) du premier commutateur (21) étant relié au conducteur (L1) de la première phase;
le deuxième pôle d'entrée (21b) du premier commutateur (21) étant relié au conducteur (L2) de la deuxième phase;
la sortie du premier commutateur (21) étant relié au premier pôle d'entrée (22a) du deuxième commutateur (22);
le deuxième pôle d'entrée (22b) du deuxième commutateur (22) étant relié au conducteur (L3) de la troisième phase;
la sortie du deuxième commutateur (22) étant relié au premier pôle d'entrée (23a) du troisième commutateur (23);
la sortie du convertisseur (10) étant relié au deuxième pôle d'entrée (23b) du troisième commutateur (23);
la sortie du troisième commutateur (23) étant reliée à la prise (4),
et le capteur (3) étant relié à la sortie du troisième commutateur (23).

6. Le dispositif d'alimentation électrique d'un appareil monophasé pendant une défaillance d'une ou plusieurs phases du réseau électrique triphasé selon la revendication 5, **caractérisé en ce que** le capteur (3) est galvaniquement isolé de la tension de la phase, de préférence via un transformateur (5).

7. Le dispositif d'alimentation électrique d'un appareil monophasé lors d'une défaillance d'une ou plusieurs phases du réseau électrique triphasé selon la revendication 6, **caractérisé en ce que** le transformateur (5) est relié à la sortie du troisième commutateur (23) et un redresseur (7) et un stabilisateur (8) pour alimenter l'unité de contrôle (1) sont reliés au transformateur (5).

8. Le dispositif d'alimentation électrique d'un appareil monophasé pendant une défaillance d'une ou plusieurs phases du réseau électrique triphasé selon l'une quelconque des revendications 5 à 7, **caractérisé en ce qu'**un élément d'affichage (14) est relié à l'unité de contrôle (1).

9. Le dispositif d'alimentation électrique d'un appareil monophasé lors d'une défaillance d'une ou plusieurs phases du réseau électrique triphasé selon l'une quelconque des revendications 5 à 8, **caractérisé en ce qu'**une commande (13) est reliée à l'unité de contrôle (1).

10. Le dispositif d'alimentation électrique d'un appareil monophasé lors d'une défaillance d'une ou plusieurs phases du réseau électrique triphasé selon l'une quelconque des revendications 5 à 9, **caractérisé en ce qu'**un interface de communication (12), de préférence RS-485 avec protocole MODBUS, est relié à l'unité de contrôle.

11. Le dispositif d'alimentation électrique d'un appareil monophasé lors d'une défaillance d'une ou plusieurs phases du réseau électrique triphasé selon l'une quelconque des revendications 5 à 10, **caractérisé en ce qu'**il est ralié à l'unité de contrôle (1) un champ de transistor (6) destiné à la commande des commutateurs (2, 21, 22, 23), de préférence, un champ de transistor (6) commande également les interrupteurs du chargeur (11).
